# EUROPEAN PATENT APPLICATION

(11) **EP 3 258 079 A1**
(43) Date of publication of application: **20.12.2017**
(21) Application number: 15881911.0
(22) Date of filing: 09.02.2015
(51) Int. Cl.: F02B 37/12

(54) **SUPERCHARGING SYSTEM OF INTERNAL-COMBUSTION ENGINE AND METHOD FOR CONTROLLING SUPERCHARGING SYSTEM**

(71) Applicant: Mitsubishi Heavy Industries, Ltd., Tokyo 108-8215 (JP)
(72) Inventor: KUBO, Hiroyoshi, Tokyo 108-8215 (JP)
(74) Representative: Hess, Peter K. G.
(86) International application number: PCT/JP2015/053525
(87) International publication number: WO 2016/129036

(57) **Abstract**

A supercharging system for an internal combustion engine provided with a plurality of turbochargers includes: a state-amount detection part configured to detect a state amount related to an operational state of the internal combustion engine; and a control part configured to control at least one of an intake flow-passage switching valve or an exhaust flow-passage switching valve so that an operation mode transitions from a first operation mode to a second operation mode if the state amount is at least a threshold selected corresponding to the state amount on the basis of a first threshold function, and so that the operation mode transitions from the second operation mode to the first operation mode if the state amount is less than a threshold selected corresponding to the state amount on the basis of a second threshold function. The first threshold function and the second threshold function are set to be different from each other.

## Description

### TECHNICAL FIELD

The present disclosure relates to a multi-stage supercharging system of an internal combustion engine and a method of controlling the supercharging system.

### BACKGROUND ART

A widely-used turbocharger supplies air (supercharging) to an internal combustion engine with a turbo compressor coupled to an exhaust turbine by driving the exhaust turbine with exhaust gas of the internal combustion engine. Further, to improve the supercharging efficiency of the internal combustion engine, in a known two-stage turbo system, a turbocharger is provided for each of the high-pressure side and the low-pressure side to perform two-stage supercharging.

For instance, Patent Document 1 discloses, for such a type of two-stage turbo system, performing a switch control on an exhaust flow passage by executing a plurality of operation modes selectively in response to an operational state. Especially in Patent Document 1, a plurality of valves are disposed in the exhaust flow passage, and each operation mode controls a different valve.

### Citation List

### Patent Literature

Patent Document 1: JP2005-146906A

### SUMMARY

### Problems to be Solved

In Patent Document 1 described above, the operational state is determined on the basis of the engine rotation speed and the fuel injection amount. However, the engine rotation speed and the fuel injection amount are difficult to maintain to be strictly constant due to the characteristics of the engine, and may change more than a little. Thus, if the operational state is in the vicinity of a boundary between more than one operation modes, for instance, the above change may bring about hunting, which may make the control unstable.

An object of at least one embodiment of the present invention is to provide a supercharging system of an internal combustion engine and a control method of a supercharging system, whereby a plurality of operation modes can be switched stably when performing a switch control on the plurality of operation modes on the basis of an operational state of the internal combustion engine.

### Solution to the Problems

(1) A supercharging system for an internal combustion engine according to at least one embodiment of the present invention comprises: an internal combustion engine; a plurality of turbochargers configured to be capable of multi-stage supercharging of intake gas for the internal combustion engine; a state-amount detection part configured to detect a state amount related to an operational state of the internal combustion engine; an intake flow-passage switching valve configured to be capable of switching an intake flow passage of the intake gas of the internal combustion engine; an exhaust flow-passage switching valve configured to be capable of switching an exhaust flow passage of exhaust gas of the internal combustion engine; and a control part configured to control at least one of the intake flow-passage switching valve or the exhaust flow-passage switching valve so that an operation mode transitions from a first operation mode to a second operation mode, from among a plurality of operation modes determined in advance corresponding to the operational state, if the state amount is at least a threshold selected corresponding to the state amount on the basis of a first threshold function, and so that the operation mode transitions from the second operation mode to the first operation mode if the state amount is less than a threshold selected corresponding to the state amount on the basis of a second threshold function. The first threshold function and the second threshold function are set to be different from each other.

With the above configuration (1), a threshold selected corresponding to the state amount on the basis of the first threshold function which is a reference for transition from the first operation mode to the second operation mode, and a threshold selected corresponding to the state amount on the basis of the second threshold function which is a reference for transition from the second operation mode to a low rotation mode, are set to be different from each other. With the first threshold function and the second threshold function having a difference therebetween, upon transition from one of the second operation mode and the first operation mode to another, it is possible to prevent occurrence of hunting caused by returning transition of the operation mode from the other one to the previous one due to a change in the state amount.

(2) In some embodiments, in the above configuration (1), the operational state is determined by a plurality of state amounts.

With the above configuration (2), in a case where the operational state of the internal combustion engine is determined by a plurality of state amounts, it is possible to prevent hunting effectively, and to switch the operation modes stably.

(3) In some embodiments, in the above configuration (1) or (2), the plurality of turbochargers comprises: a first turbocharger; and a second turbocharger including an exhaust turbine disposed downstream of an exhaust turbine of the first turbocharger in the exhaust flow passage.

With the above configuration (3), it is possible to achieve the above effect in a multi-stage supercharging system equipped with the first turbocharger and the second turbocharger.

(4) In some embodiments, in the above configuration (3), the intake flow passage comprises: an intake in-line flow passage connected from outside to the internal combustion engine via a turbo compressor of the first turbocharger and a turbo compressor of the second turbocharger; and an intake bypass flow passage connecting an outlet side of the turbo compressor of the first turbocharger and an outlet side of the turbo compressor of the second turbocharger. The exhaust flow passage includes: an exhaust in-line flow passage extending from the internal combustion engine to the outside via the exhaust turbine of the second turbocharger and the exhaust turbine of the first turbocharger; an exhaust first bypass flow passage connecting an inlet side of the exhaust turbine of the second turbocharger and an inlet side of the turbine of the first turbocharger; and an exhaust second bypass flow passage connecting an outlet side of the exhaust turbine of the second turbocharger and a downstream side of a downstream connection point between the exhaust first bypass flow passage and the exhaust in-line flow passage. The intake flow-passage switching valve is a compressor bypass valve disposed in the intake bypass flow passage. The exhaust switching valve comprises an exhaust flow-rate control valve disposed in the exhaust first bypass flow passage, and a waste gate valve disposed in the exhaust second bypass flow passage.

With the above configuration (4), it is possible to prevent hunting effectively in a control for transition between the operation modes by switching the compressor bypass valve being the intake flow-passage switching valve, the exhaust flow-rate control valve being the exhaust switching valve, and the waste gate valve.

(5) In some embodiments, in the above configuration (4), the controller is configured to control the operation mode to be capable of transitioning between: a first operation mode in which the compressor bypass valve, the exhaust-flow rate control valve, and the waste gate valve are controlled to be in a closed state; a second operation mode in which an opening degree of the compressor bypass valve is controlled while the exhaust flow-rate control valve and the waste gate valve are controlled to be in the closed state when the internal combustion engine is at a high-rotation side compared to the first operation mode; a third operation mode in which the compressor bypass valve and the exhaust-flow rate control valve are controlled to be in an open state while the waste gate valve is controlled to be in the closed state when the internal combustion engine is at a high-rotation side compared to the second operation mode; and a fourth operation mode in which an opening degree of the waste gate valve is controlled while the compressor bypass valve and the exhaust flow-rate control valve are controlled to be in the open state when the internal combustion engine is at a high-rotation side compared to the third operation mode.

With the above configuration (5), it is possible to prevent hunting effectively in a control for transition between the first to fourth operation modes in response to the operational state.

(6) A method of controlling a supercharging system for an internal combustion engine comprising: an internal combustion engine; a plurality of turbochargers configured to be capable of multi-stage supercharging of intake gas for the internal combustion engine; a state-amount detection part configured to detect a state amount related to an operational state of the internal combustion engine; an intake flow-passage switching valve configured to be capable of switching an intake flow passage of the intake gas of the internal combustion engine; an exhaust flow-passage switching valve configured to be capable of switching an exhaust flow passage of exhaust gas of the internal combustion engine, according to at least one embodiment of the present invention, to solve the above problem, comprises: a state amount detection step of detecting the state amount related to the operational state of the internal combustion engine with the state amount detection part; and a control step of controlling at least one of the intake flow-passage switching valve or the exhaust flow-passage switching valve so that an operation mode transitions from a first operation mode to a second operation mode, from among a plurality of operation modes determined in advance corresponding to the operational state, if the state amount is at least a threshold selected corresponding to the state amount on the basis of a first threshold function, and so that the operation mode transitions from the second operation mode to the first operation mode if the state amount is less than a threshold selected corresponding to the state amount on the basis of the second threshold function. The first threshold function and the second threshold function are set to be different from each other.

The above configuration (6) can be suitably performed by the above described supercharging system (including the above various embodiments) of the internal combustion engine.

### Advantageous Effects

According to at least one embodiment of the present invention, it is possible to provide a supercharging system of an internal combustion engine and a control method of a supercharging system, whereby a plurality of operation modes can be switched stably when performing a switch control on the plurality of operation modes on the basis of an operational state of the internal combustion engine.

### BRIEF DESCRIPTION OF DRAWINGS

FIG. 1 is a schematic diagram illustrating an overall configuration of a supercharging system of an internal combustion engine system according to an embodiment of the present invention.
FIG. 2 is a graph showing a relationship between an operational state of an internal combustion engine and each operation mode.
FIG. 3 is a table of control targets in each operation mode.
FIG. 4 is a schematic diagram showing the flow path during the first operation mode in the supercharging system depicted in FIG. 1.
FIG. 5 is a schematic diagram showing the flow path during the second operation mode in the supercharging system depicted in FIG. 1.
FIG. 6 is a schematic diagram showing the flow path during the third operation mode in the supercharging system depicted in FIG. 1.
FIG. 7 is a schematic diagram showing the flow path during the fourth operation mode in the supercharging system depicted in FIG. 1.
FIG. 8 is a schematic diagram showing relationships between the operation modes with thresholds for determining transition.
FIG. 9A is a schematic diagram of transition from the first operation mode to the second operation mode.
FIG. 9B is a schematic diagram of transition from the second operation mode to the first operation mode.
FIG.10 is an example of a relationship between the engine rotation speed and the threshold for the injection amount determined by the threshold function.
FIG. 11 is a flowchart of a method for operating steps of a method of controlling a supercharging system according to an embodiment of the present invention.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not intended to limit the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

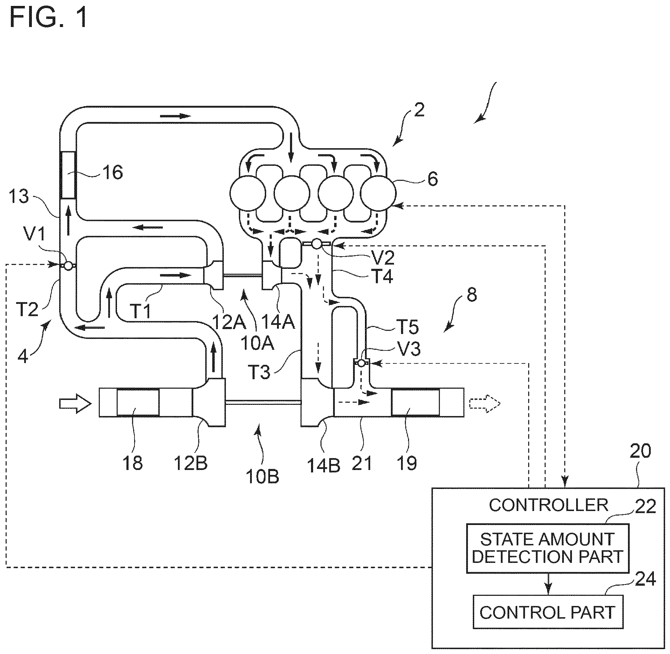

FIG. 1 is a schematic diagram illustrating an overall configuration of a supercharging system (two-stage turbo system) 2 of an internal combustion engine 1 according to an embodiment of the present invention.

The internal combustion engine 1 is a four-cylinder diesel engine, for instance. Intake air introduced from an intake system 4 undergoes compressed ignition combustion with fuel supplied from a common rail (not depicted) in a combustion chamber 6, and thereby power is generated. Exhaust gas produced in the combustion chamber 6 is discharged outside via an exhaust system 8.

The supercharging system 2 includes the first turbocharger 10A and the second turbocharger 10B. The first turbocharger 10A includes a turbo compressor 12A and an exhaust turbine 14A. The second turbocharger 10B includes a turbo compressor 12B and an exhaust turbine 14B. The two turbochargers 10A, 10B are turbochargers having substantially the same turbine capacity. In an in-line supercharging mode, the first turbocharger 10A on the upstream side of the exhaust flow passage functions as a high-pressure turbocharger, and the second turbocharger 10B on the downstream side of the exhaust flow passage functions as a low-pressure turbocharger.

The intake system 4 includes an intake in-line flow passage T1 connected to the internal combustion engine 1 via the turbo compressor 12A of the first turbocharger 10A and the turbo compressor 12B of the second turbocharger 10B from outside, and an intake bypass flow passage T2 connecting an outlet side of the turbo compressor 12A of the first turbocharger 10A and an outlet side of the turbo compressor 12B of the second turbocharger 10B. Further, a compressor bypass valve V1, which is an intake flow-passage switching valve, is disposed in the intake bypass flow passage T2. The compressor bypass valve V1 is a proportional control valve and is configured to be capable of controlling the flow rate continuously in accordance with the opening degree.

An inter cooler 16 for cooling supply air compressed and heated by a turbocharger is disposed between the internal combustion engine 1 and a downstream merging point 13 of the intake in-line flow passage T1 and the intake bypass flow passage T2. Further, an air cleaner 18 for purifying intake air is disposed in the vicinity of the inlet of the intake system 4.

The exhaust system 8 includes an exhaust in-line flow passage T3 extending from the internal combustion engine 1 to outside via the exhaust turbine 14B of the second turbocharger 10B and the exhaust turbine 14A of the first turbocharger 10A, an exhaust first bypass flow passage T4 connecting an inlet side of the exhaust turbine 14B of the second turbocharger 10B and an inlet side of the exhaust turbine 14A of the first turbocharger 10A, and an exhaust second bypass flow passage T5 connecting a downstream side of a downstream connection point between the exhaust first bypass flow passage T4 and the exhaust in-line flow passage T3 and the outlet side of the exhaust turbine 14B of the second turbocharger 10B. Further, an exhaust flow-rate control valve V2 is disposed in the exhaust first bypass flow passage T4, and a waste-gate valve V3 is disposed in the exhaust second bypass flow passage T5. The exhaust flow-rate control valve V2 and the waste-gate valve V3 are both an exhaust switching valve and is configured to be capable of controlling the flow rate continuously in accordance with the opening degree, thus serving as a proportional control valve.

A noise-canceling muffler 19 is disposed on the downstream side of a downstream merging point 21 between the exhaust in-line flow passage T3 and the exhaust second bypass flow passage T5, in the exhaust system 8.

The supercharging system 1 includes a controller 20, which is a control unit. The controller 20 is a computation processing unit, and includes a computation processing device such as a microprocessor. The controller 20 is capable of switching the flow passage of the intake system 4 and the exhaust system 8 by controlling the compressor bypass valve V1, the exhaust flow-rate control valve V2, and the waste-gate valve V3 in accordance with the following first to fourth operation modes.

Specifically, the controller 20 includes, to perform the following controls, a state-amount detection part 22 for detecting a state amount related to the operational state of the internal combustion engine 1, and a control part 24 for controlling at least one of the intake flow-passage switch valve or the exhaust flow-passage switch valve.

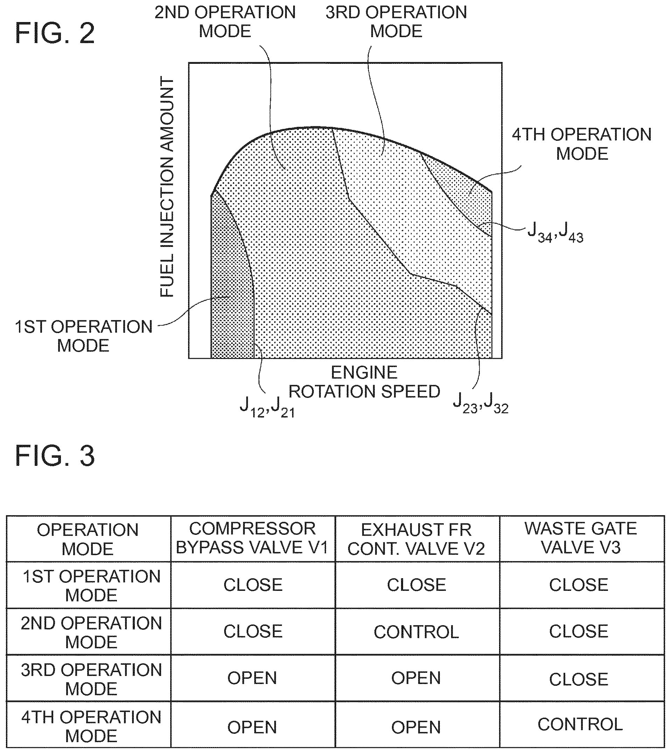

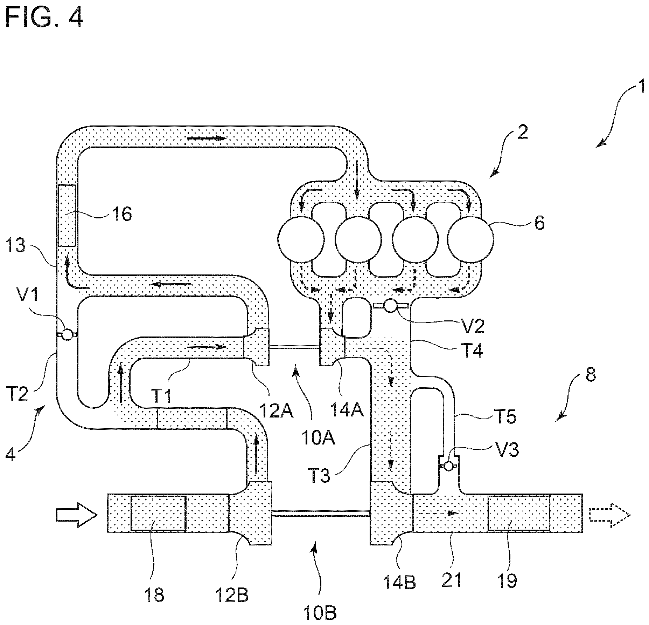

Next, the first to fourth operation modes will be described in detail. FIG. 2 is a graph showing a relationship between an operational state of the internal combustion engine 1 and each operation mode. FIG. 3 is a table of control targets in each operation mode. FIGs. 4 to 7 are schematic diagrams showing the flow paths of the intake system 4 and the exhaust system 8 in the first to fourth operation modes, respectively.

In FIGs. 4 to 7, the flow paths to be realized are shown schematically by shading.

The controller 20 selectively executes the first to fourth operation modes in response to the operational state of the internal combustion engine 1. The operational state is determined by a plurality of state amounts. In the example depicted in FIG. 2, in particular, the operational state is determined by two state amounts, the engine rotation speed and the fuel injection amount. The first operation mode is executed in an operational state in which the engine rotation speed and the fuel injection are relatively small. With an increase in the engine rotation speed and the fuel injection amount, the operation mode shifts to the second to fourth operation modes in order.

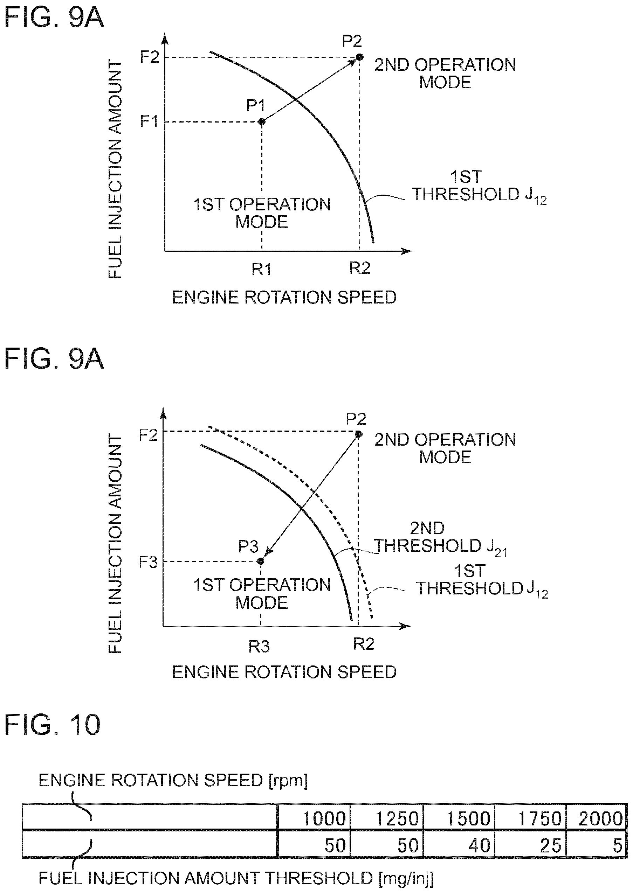

In FIG. 2, the first threshold functions J₁₂, J₂₃, J₃₄ and the second threshold functions J₂₁, J₃₂, J₄₃ are the same, respectively, to show the relationship between the operation modes simply. However, the threshold functions are set to be different from each other as described below (see FIGs. 9A and 9B).

In the first operation mode, the compressor bypass valve V1, the exhaust flow-rate control valve V2, and the waste-gate valve V3 are all controlled to be in a closed state (see FIG. 3). At this time, the flow path in the intake system 4 is configured such that supply air introduced from outside via an air cleaner 18 flows into the inter cooler 16 via the turbo compressor 12B of the turbocharger 10B and the turbo compressor 10A of the turbocharger 10A, and then flows into the internal combustion engine 2. The flow path in the exhaust system 8 is configured such that exhaust gas from the internal combustion engine 1 flows into the muffler 19 via the exhaust turbine 14A of the turbocharger 10A and the exhaust turbine 14B of the turbocharger 10B, and then is discharged to the outside.

As described above, in the first operation mode, performed is an in-line supercharging mode in which the two turbochargers 10A, 10B are connected in series.

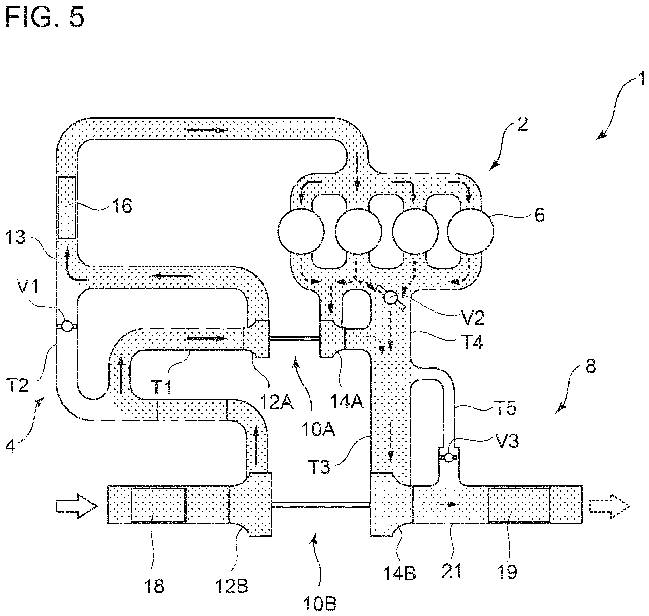

In the second operation mode, while the compressor bypass valve V1 and the waste-gate valve V3 are controlled to be in a closed state, the opening degree of the exhaust flow-rate control valve V2 is controlled (see FIG. 3). At this time, as depicted in FIG. 5, while the flow path in the intake system 4 is similar to that in the first operation mode, in the flow path in the exhaust system 8, the flow rate of exhaust gas is controlled in response to the opening degree of the exhaust flow-rate control valve V2. That is, the flow rate of exhaust gas to the exhaust turbine 14A of the first turbocharger 10A is controlled by controlling the opening degree of the exhaust flow-rate control valve V2, and thereby the turbine output is controlled. Exhaust gas that has passed through the first turbocharger 10A and exhaust gas that has passed through the exhaust flow-rate control valve V2 merge, and then flow into the exhaust turbine 14B of the second turbocharger 10B. Exhaust gas having flowed into the exhaust turbine 14B of the second turbocharger 10B passes through the muffler 19 and is discharged outside.

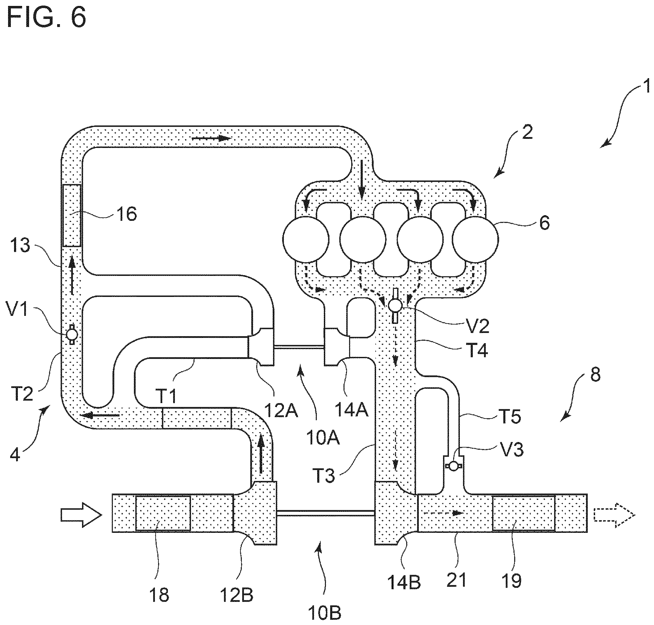

In the third operation mode, while the waste-gate valve V3 is controlled to be in a closed state, the compressor bypass valve V1 and the exhaust flow-rate control valve V2 are controlled to be in an open state (see FIG. 3). At this time, as depicted in FIG. 6, the flow path including the compressor bypass valve V1 and the exhaust flow-rate control valve V2 has a greater flow-path cross-sectional area than the flow path passing through the first turbocharger 10A, and thus a great part of air and exhaust gas flows through the compressor bypass valve V1 and the exhaust flow-rate control valve V2. Thus, the first turbocharger 10A does not operate much and is in an idling state.

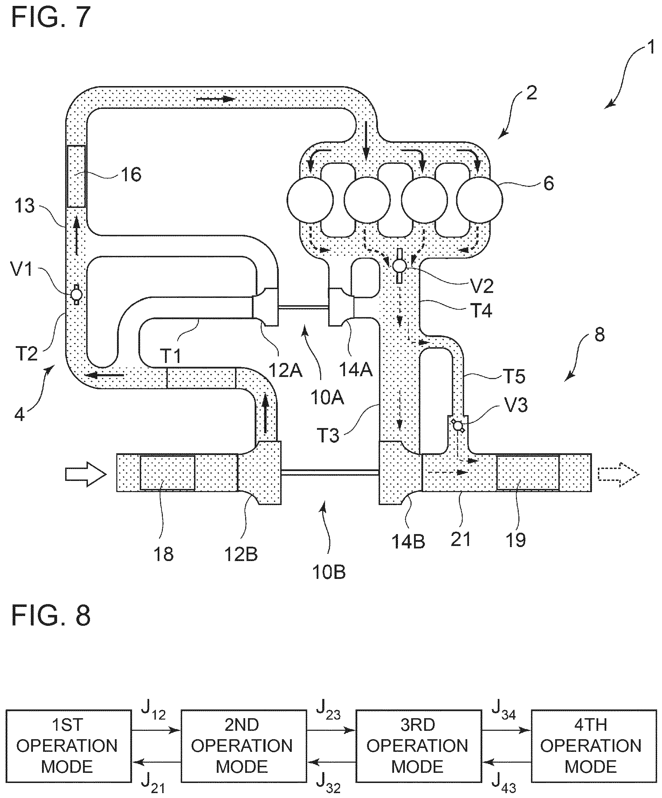

In the fourth operation mode, while the compressor bypass valve V1 and the exhaust flow-rate control valve V2 are controlled to be in an open state, the opening degree of the waste-gate valve V3 is controlled (see FIG. 3). A this time, as depicted in FIG. 7, the flow rate of exhaust gas that flows toward the exhaust turbine 14B of the second turbocharger 10B is controlled depending on the control of the waste-gate valve V3, and thus the output of the second turbocharger 10B is controlled.

Next, the transition between the above described operation modes will be described with reference to FIGs. 8 to 10. FIG. 8 is a schematic diagram showing relationships between the operation modes with thresholds for transition determination. FIG. 9A is a schematic diagram of transition from the first operation mode to the second operation mode. FIG. 9B is a schematic diagram of transition from the second operation mode to the first operation mode. FIG .10 is an example of a relationship between the engine rotation speed and the threshold for the injection amount determined by the threshold function.

As described above, the operation mode shifts from the first to fourth operation modes with an increase in the engine rotation speed and the fuel injection amount that define the operational state. As depicted in FIG. 8, an operation mode is shifted to the next operation mode by comparing a state amount that defines the operational state to a threshold for transition determination. The threshold for transition determination is prepared so as to be set on the basis of the first threshold functions J₁₂, J₂₃, J₃₄ used for transition determination from the first operation mode to the second operation mode, and the second threshold functions J_{21,} J₃₂, J₄₃ used for transition determination from the second operation mode to the first operation mode, from among two adjacent operation modes.

The first threshold functions J₁₂, J₂₃, J₃₄, and the second threshold functions J₂₁, J₃₂, J₄₃ may be stored in a storage device such as a memory so as to be readable for the above controls when needed. In this case, the first threshold functions J₁₂, J₂₃, J₃₄, and the second threshold functions J_{21,} J₃₂, J₄₃ are determined as, for instance, a function of a relationship between the engine rotation speed and the threshold for fuel injection amount. For instance, in an example of the threshold functions depicted in FIG. 10, a threshold for fuel injection amount corresponding to an actual measurement value of the engine rotation speed is selected.

For instance, as a threshold for transition determination between the first operation mode and the second operation mode, prepared are the first threshold function J₁₂ used for transition determination from the first operation mode to the second operation mode and the second threshold function J₂₁ used for transition determination from the second operation mode to the first operation mode, and the threshold for fuel injection corresponding to an actual measurement value of the engine rotation speed is selected for each function. Furthermore, as a threshold for transition determination between the second operation mode and the third operation mode, prepared are the first threshold function J₂₃ used for transition determination from the second operation mode to the third operation mode and the second threshold function J₃₂ used for transition determination from the third operation mode to the second operation mode, and the threshold for fuel injection corresponding to an actual measurement value of the engine rotation speed is selected for each function. Furthermore, as a threshold for transition determination between the third operation mode and the fourth operation mode, prepared are the first threshold function J₃₄ used for transition determination from the third operation mode to the fourth operation mode and the second threshold function J₄₃ used for transition determination from the fourth operation mode to the third operation mode, and the threshold for fuel injection corresponding to an actual measurement value of the engine rotation speed is selected for each function.

As depicted in FIG. 9A, when the operational state of the internal combustion engine 1 changes from P1 (engine rotation speed R1, fuel injection amount F1) to P2 (engine rotation speed R2, fuel injection amount F2), and thereby the state amount becomes equal to or greater than a threshold set on the basis of the first threshold function J₁₂, the operation mode shifts from the first operation mode to the second operation mode. The operational state (i.e., engine rotation speed and fuel injection amount) of the internal combustion engine 1 includes a fluctuation component to some extent. Thus, assuming that an actual measurement value of a particular engine rotation speed is obtained, if the threshold set on the basis of the second threshold function J₂₁ is equal to the threshold set on the basis of the first threshold function J₁₂, P2 being sufficiently close to the threshold set on the basis of the first threshold function J₁₂ may cause the operation mode to return to the first operation mode due to the fluctuation component, which may lead to occurrence of hunting.

Thus, in the present embodiment, as depicted in FIG. 9B, if an actual measurement value of a specific engine rotation speed is obtained, the threshold set on the basis of the second threshold function J₂₁ is set to be smaller than the threshold set on the basis of the first threshold function J₁₂, so that the first threshold function J₁₂ and the second threshold function J₂₁ are different from each other. Accordingly, it is possible to prevent hunting even if the operational state (i.e., engine rotation speed and fuel injection amount) of the internal combustion engine 1 includes a fluctuation component.

Further, as depicted in FIG. 9B, when the operational state of the internal combustion engine 1 changes from P2 (engine rotation speed R2, fuel injection amount F2) to P3 (engine rotation speed R3, fuel injection amount F3), and thereby the actual measurement value of the fuel injection amount becomes less than a threshold set on the basis of the second threshold function J₂₁, the operation mode shifts from the second operation mode to the first operation mode. Also in this case, since the first threshold function J₁₂ is set to be different from the second threshold function J₂₁, it is possible to prevent hunting even if the operational state (i.e., engine rotation speed and fuel injection amount) of the internal combustion engine 1 includes a fluctuation component.

While the transition between the first operation mode and the second operation mode is described as an example in FIGs. 9A and 9B, the first threshold functions J₂₃, J₂₄ and the second threshold functions J₃₂, J₄₃ are also set to be different for the transition between the second operation mode and the third operation mode and for the transition between the third operation mode and the fourth operation mode, and thereby hunting is effectively prevented.

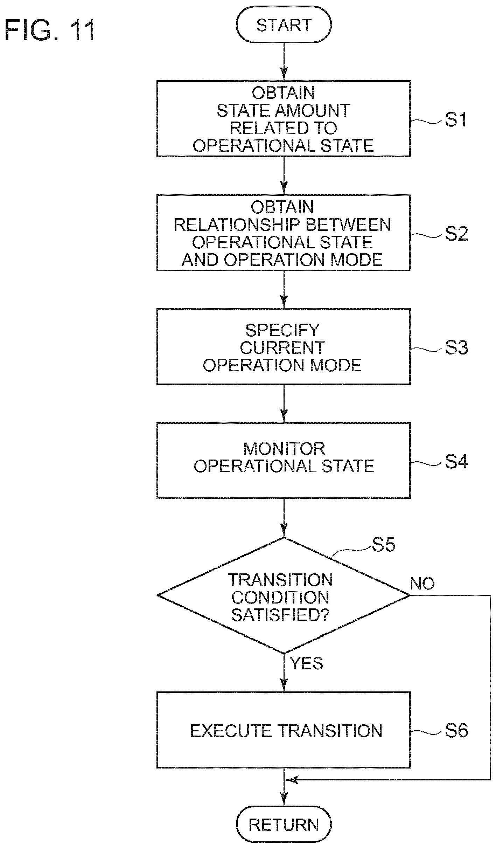

Next, a method of controlling the supercharging system 2 having the above configuration will be described in detail. FIG. 11 is a flowchart of a method for operating steps of a method of controlling the supercharging system 2 according to an embodiment of the present invention.

The state amount-detection part 22 detects a state amount related to the operational state of the internal combustion engine 1 (step S1). In the present embodiment, the state-amount detection part 22 obtains an engine rotation speed and a fuel injection amount as a state amount.

The engine rotation speed is obtained from a rotation-speed sensor disposed in the internal combustion engine 1, for instance, and the fuel injection amount is obtained on the basis of a control signal transmitted to a fuel supply device (not depicted) of the internal combustion engine 1.

Subsequently, the control part 24 obtains a pre-stored relationship (see FIG. 2) between an operational state and an operation mode from a non-depicted storage device such as a memory (step S2). On the basis of the state amount detected in step S1, it is specified which of the first to fourth operation modes is the current operation mode (step S3).

Next, the control part 24 monitors the operational state (step S4), and compares the magnitude of the first threshold and the second threshold corresponding to the operation mode, thereby determining whether the condition for transition is satisfied (step S5). As a result, if the condition for transition is satisfied (step S5: YES), transition to an operation mode corresponding to the condition is executed (step S6).

If the condition for transition is not satisfied (step S5: NO), transition of the operation mode is not performed, and the process returns (RETURN).

Next, transition depicted in FIG. 9A, from the first operation mode to the second operation mode, will be described in detail. The control part 24 obtains the first threshold function J₁₂, and the transition is executed if an actual measurement value of the fuel injection amount is greater than a threshold selected corresponding to the actual measurement value of the engine rotation speed on the basis of the first threshold function J₁₂. At this time, the second threshold function J₂₁ is set to be different from the first threshold function J₁₂, and thus hunting does not occur. Next, transition depicted in FIG. 9B, from the second operation mode to the first operation mode, will be described in detail. The control part 24 obtains the second threshold function J₂₁, and the transition is executed if a state amount is smaller than a threshold selected corresponding to the actual measurement value of the engine rotation speed on the basis of the second threshold function J₂₁. At this time, the second threshold function J₂₁ is set to be different from the first threshold function J₁₂, and thus hunting does not occur.

In the case of FIG. 9A in the above embodiment, transition may be executed when the state amount continues to be greater than the threshold selected corresponding to the actual measurement value of the engine rotation speed on the basis of the threshold function J₁₂ for a predetermined period or longer. If the state amount is continuously greater than the threshold function J₁₂, transition is executed, determining that condition for transition is clearly satisfied, even though there is an influence of fluctuation due to hunting. Similarly, in the case of FIG. 9B, transition may be executed when the state amount continues to be smaller than the threshold selected corresponding to the actual measurement value of the engine rotation speed on the basis of the threshold function J₂₁ for a predetermined period or longer.

The predetermined period used for determination in this case should be set to be sufficiently longer than the fluctuation period due to hunting.

As described above, according to the present invention, it is possible to provide a supercharging system of an internal combustion engine and a control method of a supercharging system, whereby a plurality of operation modes can be switched stably when performing a switch control on the plurality of operation modes on the basis of an operational state of the internal combustion engine 1.

### Industrial Applicability

The present disclosure can be suitably applied to a supercharging system of an internal combustion engine and a method of controlling the supercharging system.

### Description of Reference Numerals

- 1: Supercharging system
- 2: Internal combustion engine (engine)
- 4: Intake system
- 6: Combustion chamber
- 8: Exhaust system
- 10A: High-pressure side turbocharger
- 10B: Low-pressure side turbocharger
- 12A: High-pressure side turbo compressor
- 12B: Low-pressure side turbo compressor
- 13: Merging point
- 14A: High-pressure side exhaust turbine
- 14B: Low-pressure side exhaust turbine
- 16: Inter cooler
- 18: Air cleaner

- 19: Muffler
- 20: Controller
- 21: Merging point
- 22: State amount detection part
- 24: Control part

## Claims

1. A supercharging system for an internal combustion engine, comprising:
an internal combustion engine;
a plurality of turbochargers configured to be capable of multi-stage supercharging of intake gas for the internal combustion engine;
a state-amount detection part configured to detect a state amount related to an operational state of the internal combustion engine;
an intake flow-passage switching valve configured to be capable of switching an intake flow passage of the intake gas of the internal combustion engine;
an exhaust flow-passage switching valve configured to be capable of switching an exhaust flow passage of exhaust gas of the internal combustion engine; and
a control part configured to control at least one of the intake flow-passage switching valve or the exhaust flow-passage switching valve so that an operation mode transitions from a first operation mode to a second operation mode, from among a plurality of operation modes determined in advance corresponding to the operational state, if the state amount is at least a threshold selected corresponding to the state amount on the basis of a first threshold function, and so that the operation mode transitions from the second operation mode to the first operation mode if the state amount is less than a threshold selected corresponding to the state amount on the basis of a second threshold function,
wherein the first threshold function and the second threshold function are set to be different from each other.

2. The supercharging system for an internal combustion engine according to claim 1, wherein the operational state is determined by a plurality of state amounts.

3. The supercharging system for an internal combustion engine according to claim 1 or 2,
wherein the plurality of turbochargers comprises:
a first turbocharger; and
a second turbocharger including an exhaust turbine disposed downstream of an exhaust turbine of the first turbocharger in the exhaust flow passage.

4. The supercharging system for an internal combustion engine according to claim 3,
wherein the intake flow passage comprises:
an intake in-line flow passage connected from outside to the internal combustion engine via a turbo compressor of the first turbocharger and a turbo compressor of the second turbocharger; and
an intake bypass flow passage connecting an outlet side of the turbo compressor of the first turbocharger and an outlet side of the turbo compressor of the second turbocharger,
wherein the exhaust flow passage includes:
an exhaust in-line flow passage extending from the internal combustion engine to the outside via the exhaust turbine of the second turbocharger and the exhaust turbine of the first turbocharger;
an exhaust first bypass flow passage connecting an inlet side of the exhaust turbine of the second turbocharger and an inlet side of the turbine of the first turbocharger; and
an exhaust second bypass flow passage connecting an outlet side of the exhaust turbine of the second turbocharger and a downstream side of a downstream connection point between the exhaust first bypass flow passage and the exhaust in-line flow passage,
wherein the intake flow-passage switching valve is a compressor bypass valve disposed in the intake bypass flow passage, and
wherein the exhaust switching valve comprises an exhaust flow-rate control valve disposed in the exhaust first bypass flow passage, and a waste gate valve disposed in the exhaust second bypass flow passage.

5. The supercharging system for an internal combustion engine according to claim 4,
wherein the controller is configured to control the operation mode to be capable of transitioning between:
a first operation mode in which the compressor bypass valve, the exhaust-flow rate control valve, and the waste gate valve are controlled to be in a closed state;
a second operation mode in which an opening degree of the compressor bypass valve is controlled while the exhaust flow-rate control valve and the waste gate valve are controlled to be in the closed state when the internal combustion engine is at a high-rotation side compared to the first operation mode;
a third operation mode in which the compressor bypass valve and the exhaust-flow rate control valve are controlled to be in an open state while the waste gate valve is controlled to be in the closed state when the internal combustion engine is at a high-rotation side compared to the second operation mode; and
a fourth operation mode in which an opening degree of the waste gate valve is controlled while the compressor bypass valve and the exhaust flow-rate control valve are controlled to be in the open state when the internal combustion engine is at a high-rotation side compared to the third operation mode.

6. A method of controlling a supercharging system for an internal combustion engine comprising:
an internal combustion engine;
a plurality of turbochargers configured to be capable of multi-stage supercharging of intake gas for the internal combustion engine;
a state-amount detection part configured to detect a state amount related to an operational state of the internal combustion engine;
an intake flow-passage switching valve configured to be capable of switching an intake flow passage of the intake gas of the internal combustion engine;
an exhaust flow-passage switching valve configured to be capable of switching an exhaust flow passage of exhaust gas of the internal combustion engine,
the method comprising:
a state amount detection step of detecting the state amount related to the operational state of the internal combustion engine with the state amount detection part; and
a control step of controlling at least one of the intake flow-passage switching valve or the exhaust flow-passage switching valve so that an operation mode transitions from a first operation mode to a second operation mode, from among a plurality of operation modes determined in advance corresponding to the operational state, if the state amount is at least a threshold selected corresponding to the state amount on the basis of a first threshold function, and so that the operation mode transitions from the second operation mode to the first operation mode if the state amount is less than a threshold selected corresponding to the state amount on the basis of the second threshold function,
wherein the first threshold function and the second threshold function are set to be different from each other.

## Amended claims

### Amended claims under Art. 19.1 PCT

1. A supercharging system for an internal combustion engine, comprising:
an internal combustion engine;
a plurality of turbochargers configured to be capable of multi-stage supercharging of intake gas for the internal combustion engine;
a state-amount detection part configured to detect a state amount related to an operational state of the internal combustion engine;
an intake flow-passage switching valve configured to be capable of switching an intake flow passage of the intake gas of the internal combustion engine;
an exhaust flow-passage switching valve configured to be capable of switching an exhaust flow passage of exhaust gas of the internal combustion engine; and
a control part configured to control at least one of the intake flow-passage switching valve or the exhaust flow-passage switching valve so that an operation mode transitions from a first operation mode to a second operation mode, from among a plurality of operation modes determined in advance corresponding to the operational state, if the state amount is at least a threshold selected corresponding to the state amount on the basis of a first threshold function, and so that the operation mode transitions from the second operation mode to the first operation mode if the state amount is less than a threshold selected corresponding to the state amount on the basis of the second threshold function,
wherein the plurality of turbochargers comprises:
a first turbocharger; and
a second turbocharger including an exhaust turbine disposed downstream of an exhaust turbine of the first turbocharger in the exhaust flow passage, and
wherein the first threshold function and the second threshold function are set to be different from each other.

2. The supercharging system for an internal combustion engine according to claim 1, wherein the operational state is determined by a plurality of state amounts.

3. The supercharging system for an internal combustion engine according to claim 1 oar 2,
wherein the intake flow passage comprises:
an intake in-line flow passage connected from outside to the internal combustion engine via a turbo compressor of the first turbocharger and a turbo compressor of the second turbocharger; and
an intake bypass flow passage connecting an outlet side of the turbo compressor of the first turbocharger and an outlet side of second turbo compressor of the second turbocharger,
wherein the exhaust flow passage includes:
an exhaust in-line flow passage extending from the internal combustion engine to the outside via the exhaust turbine of the second turbocharger and the exhaust turbine of the first turbocharger;
an exhaust first bypass flow passage connecting an inlet side of the exhaust turbine of the second turbocharger and an inlet side of the turbine of the first turbocharger; and
an exhaust second bypass flow passage connecting an outlet side of the exhaust turbine of the second turbocharger and a downstream side of a downstream connection point between the exhaust first bypass flow passage and the exhaust in-line flow passage,
wherein the intake flow-passage switching valve is a compressor bypass valve disposed in the intake bypass flow passage, and
wherein the exhaust flow passage switching valve comprises an exhaust flow-rate control valve disposed in the exhaust first bypass flow passage, and a waste gate valve disposed in the exhaust second bypass flow passage.

4. The supercharging system for an internal combustion engine according to any one of claims 1, 2, or 3,
wherein the controller is configured to control the operation mode to be capable of transitioning between:
a first operation mode in which the compressor bypass valve, the exhaust-flow rate control valve, and the waste gate valve are controlled to be in a closed state;
a second operation mode in which an opening degree of the compressor bypass valve is controlled while the exhaust flow-rate control valve and the waste gate valve are controlled to be in the closed state when the internal combustion engine is at a high-rotation side compared to the first operation mode;
a third operation mode in which the compressor bypass valve and the exhaust-flow rate control valve are controlled to be in an open state while the waste gate valve is controlled to be in the closed state when the internal combustion engine is at a high-rotation side compared to the second operation mode; and
a fourth operation mode in which an opening degree of the waste gate valve is controlled while the compressor bypass valve and the exhaust flow-rate control valve are controlled to be in the open state when the internal combustion engine is at a high-rotation side compared to the third operation mode.

5. A method of controlling a supercharging system for an internal combustion engine comprising:
an internal combustion engine;
a plurality of turbochargers configured to be capable of multi-stage supercharging of intake gas for the internal combustion engine;
a state-amount detection part configured to detect a state amount related to an operational state of the internal combustion engine;
an intake flow-passage switching valve configured to be capable of switching an intake flow passage of the intake gas of the internal combustion engine;
an exhaust flow-passage switching valve configured to be capable of switching an exhaust flow passage of exhaust gas of the internal combustion engine,
the plurality of turbochargers comprising:
a first turbocharger; and
a second turbocharger including an exhaust turbine disposed downstream of an exhaust turbine of the first turbocharger in the exhaust flow passage,
the method comprising:
a state amount detection step of detecting the state amount related to the operational state of the internal combustion engine with the state amount detection part; and
a control step of controlling at least one of the intake flow-passage switching valve or the exhaust flow-passage switching valve so that an operation mode transitions from a first operation mode to a second operation mode, from among a plurality of operation modes determined in advance corresponding to the operational state, if the state amount is at least a threshold selected corresponding to the state amount on the basis of a first threshold function, and so that the operation mode transitions from the second operation mode to the first operation mode if the state amount is less than a threshold selected corresponding to the state amount on the basis of the second threshold function,
wherein the first threshold function and the second threshold function are set to be different from each other.

Statement under Art. 19.1 PCT
Informal Comments

In the amended claim 1, the limitation of the original claim 3 is incorporated into the original claim 1, thereby specifically limiting the present invention to two-stage supercharging.

The International Search Report denies the inventive step of the original claim 1 in light of the combination of Patent Documents 1 to 3. Patent Document 2 discloses preventing hunting between a single turbo mode and a twin turbo mode by differentiating determination lines for different transition directions upon transition between the turbo modes. Although this technical idea may have some features in common with the present invention, the twin turbo system in Patent Document 2 has two turbos connected in parallel for an engine. Thus, the basic structure of Patent Document 2 is different from that of the present invention, in which the turbos are disposed in two stages on upstream and downstream of the engine.

Accordingly, Patent Document 2 has a different basic structure from other documents, and thus it would not be easy to arrive at the amended claim 1 by combining these documents. Further, an object/effect of the amended claim 1 is to prevent hunting in a two stage turbo, and thus a person skilled in the art would not easily arrive at the present invention.
